# EUROPEAN PATENT APPLICATION

(11) **EP 2 980 979 A1**
(43) Date of publication of application: **03.02.2016**
(21) Application number: 14772828.1
(22) Date of filing: 28.03.2014
(51) Int. Cl.: H02M 7/48

(54) **INVERTER DEVICE**

(30) Priority: 28.03.2013 JP 2013069266
(71) Applicant: Panasonic Intellectual Property Management Co., Ltd., Osaka-shi, Osaka 540-6207 (JP)
(72) Inventor: IWAMATSU, Yusuke, Osaka-shi, Osaka 540-6207 (JP); GOTO, Shusaku, Osaka-shi, Osaka 540-6207 (JP)
(74) Representative: Appelt, Christian W.
(86) International application number: PCT/JP2014/059348
(87) International publication number: WO 2014/157700

(57) **Abstract**

An inverter device (1) comprises: an inverter circuit (2) connected to a DC power source (10) for converting DC power to AC power by alternately switching two sets of switching elements (Q1 - Q4) on and off in each predetermined cycle; a clamping circuit (3) configured of at least one switching element (Q5 - Q6) connected between two output terminals of the inverter circuit; and a control unit (5) for controlling switching on and off of the switching elements of the inverter circuit and the clamping circuit, and the control unit (5) short-circuits the clamping circuit when it switches off all of the two sets of the switching element at least in the vicinity of zero-cross point of AC voltage, thereby enables to control an electric current even when polarity (or sign) of the AC voltage and polarity (or sign) of the output current are inconsistent with each other.

## Description

### Technical Field

The present invention relates to an inverter device for switching direct current power to convert it to alternating current power.

### Background Art

In an inverter device for switching direct current power to convert it to alternating current power, an inverter circuit of a half bridge or a full bridge is configured of semiconductor switching elements such as FET (Field Effect Transistor) or IGBT (Insulated Gate Bipolar Transistor) (hereinafter, it is referred to simply "switching elements"), and two sets of the switching elements are switched on/off alternately so that direct current power is converted to alternating current power. By the way, since inductance component and capacitance component are included in a load other than resistance component, even when all the switching elements are switched off, there may be a case that electricity stored in an inductor or a capacitor flows back to a direct current power supply or a buffer capacitor through parasitism diodes or commutating diodes of the switching elements.

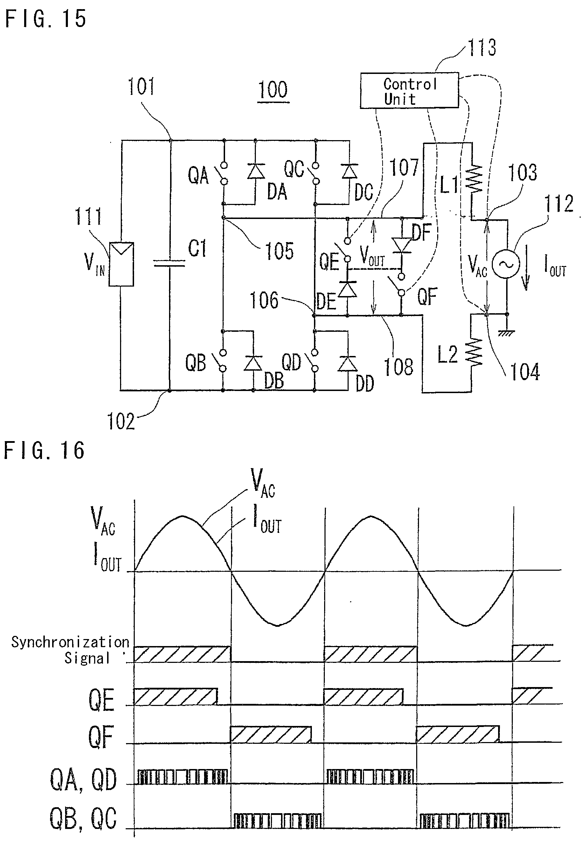

FIG. 15 shows a circuitry of a conventional inverter device described in U.S. Patent No. 7,046,534, which is proposed to prevent that electricity stored in an inductor or a capacitor flows back to a direct current power supply or a buffer capacitor. As shown in FIG. 15, an inverter circuit of a full bridge is connected between both terminals 101 and 102 of a direct current power supply 111, in which a series circuit of switching elements QA and QB and a series circuit of switching elements QC and QD are connected in parallel. In addition, output lines 107 and 108 are respectively drawn out from a connection point 105 of the switching elements QA and QB and from a connection point 106 of the switching elements QC and QD. The output lines 107 and 108 are connected to a load or an electric power system 112 through inductors L1 and L2. In addition, a clamping circuit is connected between the output lines 107 and 108, in which a series circuit of a switching element E and a rectification diode DE and a series circuit of a switching element F and a rectification diode DF are connected inversely parallel. Besides, diodes DA to DD are parasitism diodes or commutating diodes of the switching elements QA to QD each.

A control unit 113 carries out PWM (Pulse Width Modulation) controls to the switching elements QA and QD and the switching elements QB and QC alternately in each half cycle of a frequency (for example, 50Hz or 60Hz) of an alternating current power supply. In addition, timings for switching the switching elements QA and QD on and off and timings for switching the switching elements QB and QC on and off are synchronized with each other. Furthermore, the control unit 113 switches the switching elements QE and QF on/off depending on an AC voltage (polarity or sign) between AC output terminals 103 and 104.

FIG. 16 is a timing chart showing on/off of respective switching elements QA to QF when phases of alternating voltage V_{AC} and AC output current I_{OUT} are coincided with each other. During a positive half cycle of alternating current, the control unit 113 carries out the PWM control for the switching elements QA and QD, so that AC voltage (polarity or sign) between the AC output terminals 103 and 104 becomes positive (+), and thus, an output (a synchronization signal) of a comparator provided on the control unit 113 shows a positive value, for example. In the meantime, the control unit 113 switches the switching element QE on. During the switching elements QA and QD have been switched on by the PWM controls, an electric current flows from the direct current power supply 111 to the switching element QA, the inductor L1, the load or electric power system 112, the inductor L2, the switching element QD, and the direct current power supply 111, in this order. On the other hand, during the switching elements QA and QD have been switched off by the PWM controls, an inductor current due to an induced electromotive force that is occurred in the inductors L1 and L2 commutates to a rectification diode DE and the switching element QE, and flows to the load or electric power system 112 and does not flow to a buffer capacitor C1. Caused by the PWM controls to the switching elements QA and QD and operations of the inductors L1 and L2, output voltage V_{AC} and output current I_{OUT} from this inverter device 100 become substantially sinusoidal waveform, each. During a negative half cycle of alternating current, the control unit 113 carries out the PWM controls to the switching elements QB and QC, and switches the switching element QF on in the meantime, so that it carries out a similar operation while inverting the flowing direction of the electric current. In other words, the clamping circuit, in which a series circuit of the switching element QE and the rectification diode DE and a series circuit of the switching element QF and the rectification diode DF are inversely connected in parallel, serves as a function to cut off the direct current power supply 111 and the buffer capacitor C1 from the load or electric power system 112 during all of the switching elements A to D are switched off.

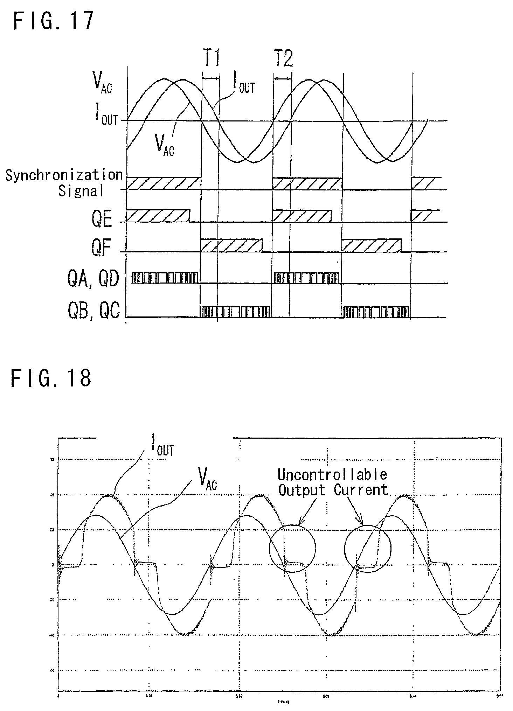

As mentioned above, the load, however, includes the inductance component and the capacitance component other than the resistance component, so that there may be a case that phases of electric current and voltage of the load or electric power system 112 are incongruous. FIG. 17 shows a case that the phase of the output current I_{OUT} is lagged behind the phase of the alternating voltage V_{AC}, as an example. In FIG. 17, the phase of the alternating voltage V_{AC} (SIC: output electric current I_{OUT}) is positive, although the phase of the output voltage V_{OUT} (SIC: alternating voltage V_{AC}) becomes negative in a time period T1. In the conventional inverter device shown in FIG. 15, the control unit 113 controls switching on/off of the switching elements QE and QF based on the voltage (polarity or sign) of the load or electric power system 112. Therefore, the switching element QE is switched off and the switching element QF switched on in the time period T1. Although the output current I_{OUT} flows in a positive direction, that is, a direction shown by an arrow in FIG. 15 in the time period T1, the rectification diode DF is reversely biased against the output current I_{OUT} even when the switching element QF is switched on, and thus, the output current I_{OUT} does not flow in this route. On the other hand, although the rectification diode DE is forwardly biased for the output current I_{OUT}, the switching element QE had been switched off, the output current I_{OUT} does not flow in this route, too. Consequently, the output current I_{OUT} flows back to the buffer capacitor C1 through the parasitism diodes or commutation diodes of the switching elements QB/QC, and the buffer capacitor C1 cannot be cut off from the load or electric power system 112 in a time period where the switching elements QB/QC are switched off. In addition, such an electric current path becomes the same regardless of switching on state or switching off state of the switching elements QB/QC, so that an output voltage between the output lines 107 and 108 becomes constantly V_{IN} in the time period T1, and thus, the PWM control is uncontrollable (or electric current is uncontrollable). The same goes for a time period T2 where the phase of the alternating voltage V_{AC} is positive and the phase of the output electric current I_{OUT} is negative. Therefore, an actual electric current waveform does not become smoothed sinusoidal waveform as shown in FIG. 17 but becomes distorted waveform as shown in FIG. 18. In other words, in case of controlling the switching elements QE and QF based on the voltage of the load or electric power system 112 like the conventional inverter device 100, it has a problem that electric current due to electricity stored in the inductors L1 and L2 or the like is uncontrollable in a time period where polarity (or sign) of the alternating voltage V_{AC} and polarity (or sign) of the output electric current I_{OUT} are not coincided with each other. Furthermore, in the example shown in FIG. 16, in order to prevent occurrence of short-circuit due to switching on the switching elements QE and QF simultaneously, a dead-off time, during which both of the switching elements QE and QF are switched off, is provided in the vicinity of zero-cross point of alternating voltage. In such a case, an electric current caused by the inductors L1 and L2 flows to the buffer capacitor C1 through the parasitism diodes or commutation diodes of the switching elements QA to QD, even when the phases of the output electric current I_{OUT} and the alternating voltage V_{AC} are coincided with each other, so that electric current is uncontrollable temporarily.

In addition, according to the control method of this conventional inverter device 100, although on/off of the switching elements are switched responding to polarity (or sign) of the alternating voltage V_{AC} as mentioned above, when polarity (or sign) of the voltage of the alternating voltage V_{AC} is instantaneously varied in a time period where the switching elements QA/QD are switched on due to judging error of polarity (or sign) of the voltage, or voltage disturbance (electric power failure or voltage phase jump due to tap switching) in case that the alternating voltage V_{AC} is an electric power system, a short-circuited current may flow due to the switching elements QA/QD and QF or QB/QC and QE are switched on simultaneously. Furthermore, it is necessary to provide a circuit which judges polarity (or sign) of the voltage of the alternating voltage V_{AC} in the control unit 113, so that it causes complexity of the structure and control, and a factor of increase in cost.

### Disclosure of Invention

The present invention is conceived to solve the above mentioned problems of the prior art, and aimed to provide an inverter device which enables to control electric current due to electricity stored in an inductor or the like in a time period where polarity (or sign) of alternating voltage and polarity (or sign) of output current are inconsistent with each other. In addition, it is aimed to provide an inverter device which enables not to flow an inductor current to a buffer capacitor through parasitism diodes or commutation diodes of switching elements in a time period where phase of polarity (or sign) of alternating voltage and polarity (or sign) of output electric current are coincided with each other.

For achieving the above mentioned aims, an inverter device in accordance with the present invention comprises: an inverter circuit which is connected to a direct current power supply, and converts direct current power to alternating current power by switching two pairs of switching elements alternately corresponding to predetermined control signals; a clamping circuit which is configured of at least one switching element connected between two output terminals of the inverter circuit; and a control unit which controls switching on and off of the switching elements of the inverter circuit and the clamping circuit, and wherein the control unit short-circuits the clamping circuit when all of the two sets of the switching elements are switched off, thereby enables to control an electric current in a time period where polarity of an alternating voltage and polarity of an output current are inconsistent with each other.

It is preferable that the control unit carries out PWM controls to either one of the two sets of the switching elements in a predetermined time period of the predetermined control signals, and short-circuits the clamping circuit when it switches off all of the two sets of the switching elements during carrying out the PWM controls.

It is preferable that dead times are provided in an interval from switching off one set of the switching elements or another set of the switching elements among the two sets of the switching elements to short-circuiting the clamping circuit, and in an interval from non short-circuiting the clamping circuit to switching on the one set of the switching elements or the another set of the switching elements.

It is preferable that the clamping circuit can take one of a short-circuit state, a rectification state to be reverse bias when an output voltage from the inverter circuit is positive, a rectification state to be reverse bias when the output voltage is negative, and a cut-off state, and the control unit controls the clamping circuit to take the rectification state to be reverse bias against the output voltage at that time during the dead times.

It is preferable that the control unit uses a first carrier wave signal that a same profile is repeatedly continued in a positive region of voltage, a second carrier wave signal that a same profile is repeatedly continued in a negative region of voltage, and a command voltage signal that voltage is alternately varied like a sinusoidal waveform in the positive region and the negative region of voltage and has a same frequency as that of an alternating current power supply; in the positive region of voltage, it switches on one set of the switching elements that configure the inverter circuit in a time period where a value of the command voltage signal is higher than a value of the first carrier wave signal, and switches off the one set of the switching elements and short-circuits the clamping circuit in a time period where the value of the command voltage signal is lower than the value of the first carrier wave signal; and in the negative region of voltage, it switches on another set of the switching elements that configure the inverter circuit in a time period where the value of the command voltage signal is lower than a value of the second carrier wave signal, and switches off the another set of the switching elements and short-circuits the clamping circuit in a time period where the value of the command voltage signal is higher than the value of the second carrier wave signal.

Alternatively, it is preferable that the control unit uses a carrier wave signal that a same profile is repeatedly continued in a positive region of voltage, and a command voltage signal that voltage is alternately varied like a sinusoidal waveform in the positive region and has a same frequency as that of an alternating current power supply; in a region where a sign of the command voltage signal is positive, it switches on one set of the switching elements that configure the inverter circuit in a time period where a value of the command voltage signal is higher than a value of the carrier wave signal, and switches off the one set of the switching elements and short-circuits the clamping circuit in a time period where the value of the command voltage signal is lower than the value of the carrier wave signal; and in a region where a sign of the command voltage signal is negative, it switches on another set of the switching elements that configure the inverter circuit in a time period where the value of the command voltage signal is higher than the value of the carrier wave signal, and switches off the another set of the switching elements and short-circuits the clamping circuit in a time period where the value of the command voltage signal is lower than the value of the carrier wave signal.

It is preferable that the clamping circuit is a series connection of two semiconductor switching elements so that parasitism diodes or commutation diodes of them face in opposite direction each other.

Alternatively, it is preferable that the clamping circuit is an inverse parallel connection of two series circuits of a semiconductor switching element and a rectification diode so that a parasitism diode or a commutation diode of the semiconductor switching element and the rectification diode face in opposite direction each other.

It is preferable that the clamping circuit is a series connection of two semiconductor switching elements so that parasitism diodes or commutation diodes of them face in opposite direction each other, and one of the semiconductor switching elements of the clamping circuit, in which a parasitism diode or a commutation diode thereof becomes forward bias with respect to an output voltage from the inverter circuit, is switched on, in a time period where one set of the switching elements or another set of the switching elements among the two sets of the switching elements has been switched on.

Alternatively, it is preferable that the inverter circuit is configured of parallel connection of two series circuits of two IGBTs in which a collector of one is connected to an emitter of another, and the clamping circuit is configured of a series circuit of two IGBTs in which correctors of them are connected each other, and wherein driving circuits of the IGBTs in which electric potential of emitters are at same level are connected to a same electric power supply.

Alternatively, it is preferable that the clamping circuit is a bidirectional switching element of a dual-gate type GaN/AlGaN having no parasitism diode.

It is preferable that the control unit can vary at least one of voltage and frequency of the command voltage signal, and thereby, it drives an inductive load or a capacitive load.

It is preferable that the direct current power supply is a secondary battery directly or indirectly connected to input terminals of the inverter circuit, and the control unit gives a charge of electricity from an alternating current power supply connected to two output terminals of the inverter circuit into the secondary battery by driving the inverter circuit as a synchronous rectification circuit.

It is preferable that the device further has a voltage detection unit to detect a voltage of the alternating voltage, and the control unit generates periodic reactive power variation in an output from the inverter circuit by varying the command voltage signal, and detects whether the inverter device carries out individual operation cut off from an alternating current power system or not, based on voltage variation and frequency variation detected by the voltage detection unit.

In this way, the inverter device in accordance with the present invention short-circuits the clamping circuit when it switches all of the switching elements constituting the inverter circuit off regardless of the phase of the output voltage and the phase of the output electric current of the load or electric power system. Therefore, different from the conventional inverter device that a clamping circuit is configured of a series circuit of a switching element and a diode, electric current flows through the clamping circuit, even in a time period where polarity (or sign) of the alternating voltage and polarity (or sign) of the output electric current are inconsistent with each other. Consequently, an electric current due to electricity stored in an inductor or the like can be controlled even in the time period where polarity (or sign) of the alternating voltage and polarity (or sign) of the output electric current are inconsistent with each other. In addition, with respect to on/off control of the switching elements, it is no need to detect polarity (or sign) of the alternating voltage, so that there is no judgment error of polarity (or sign) of the alternating voltage or hazardous nature of short-circuit due to voltage disturbance when an alternating voltage is the electric power system, and thus, a safety inverter device can be supplied.

### Brief Description of Drawings

[FIG. 1]

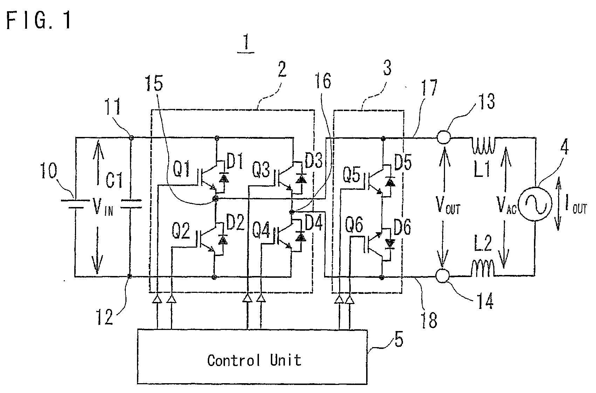

   FIG. 1 is a circuit diagram showing a configuration of an inverter device in accordance with an embodiment of the present invention.
[FIG. 2]

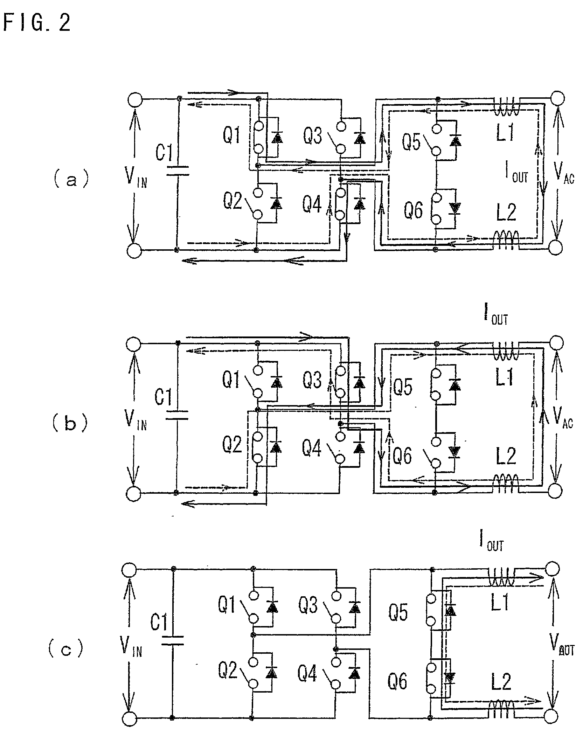

   FIG. 2 is a diagram showing equivalent circuits and current flows in three basic operation modes in the above mentioned embodiment.
[FIG. 3]

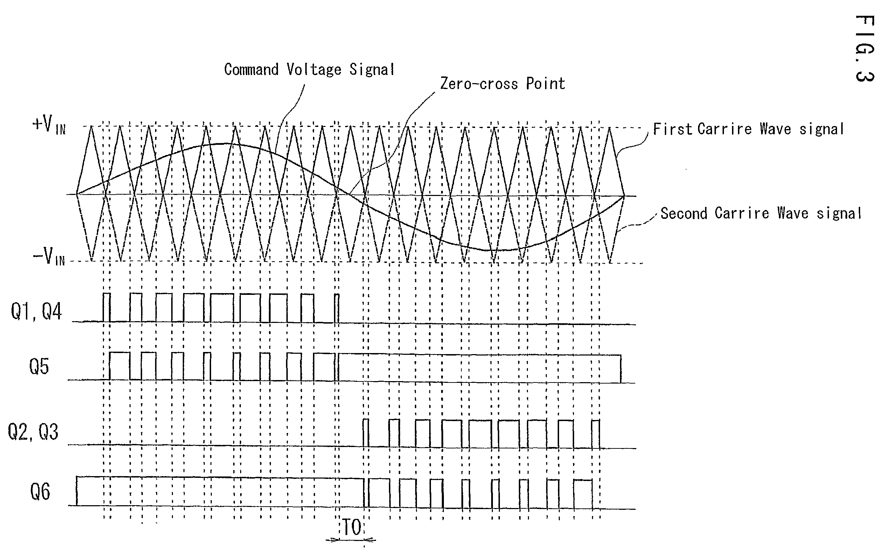

   FIG. 3 is a timing chart of PWM control in the above mentioned embodiment.
[FIG. 4]

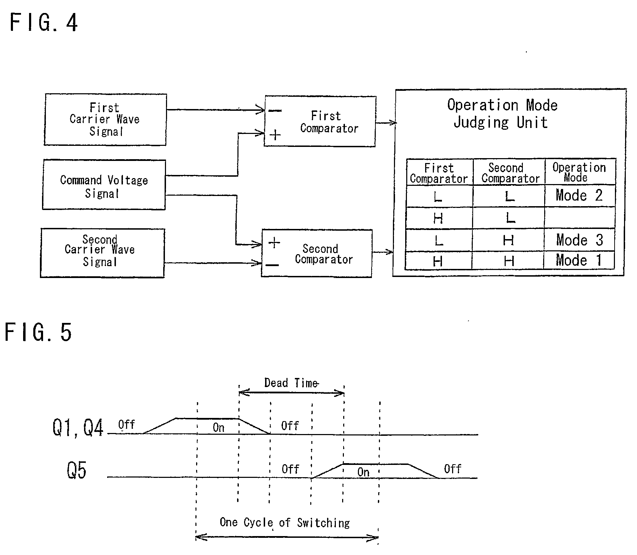

   FIG. 4 is a diagram showing judgment of operation mode in an inside processing of a control unit in the above mentioned embodiment.
[FIG. 5]
   FIG. 5 is a chart showing definition of a dead time in the above mentioned embodiment.
[FIG. 6]

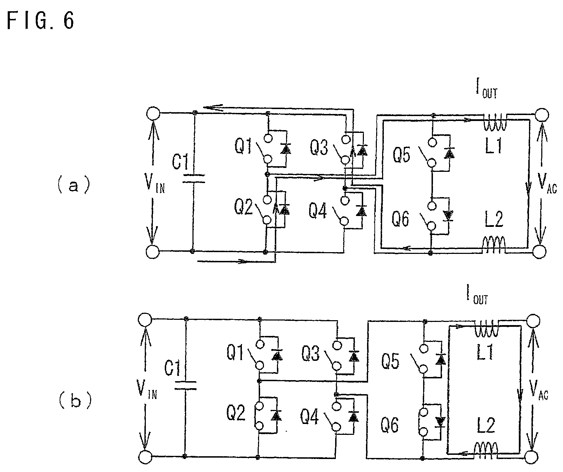

   FIG. 6 is a diagram showing equivalent circuits and current flows in other operation modes other than the basic operation modes in the above mentioned embodiment.
[FIG. 7]

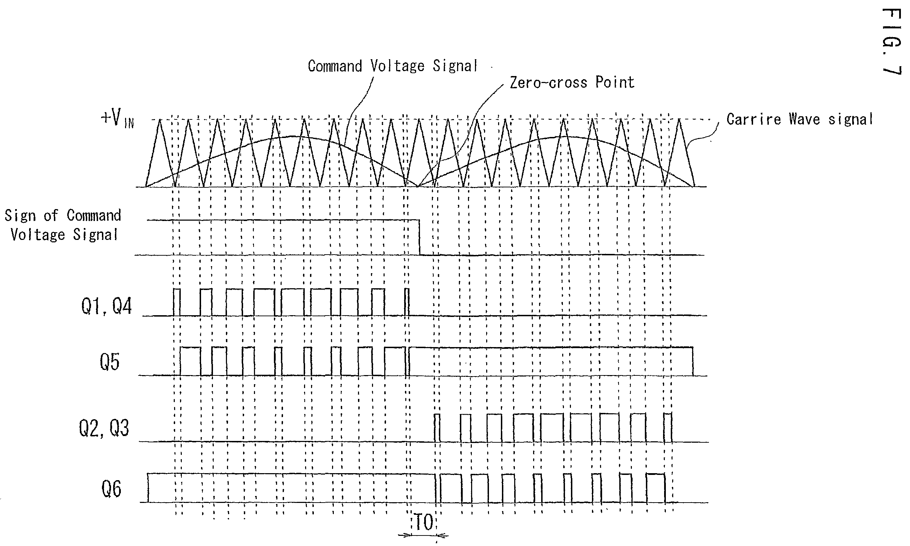

   FIG. 7 is a timing chart showing a deformed example of the PWM control in the above mentioned embodiment.
[FIG. 8]

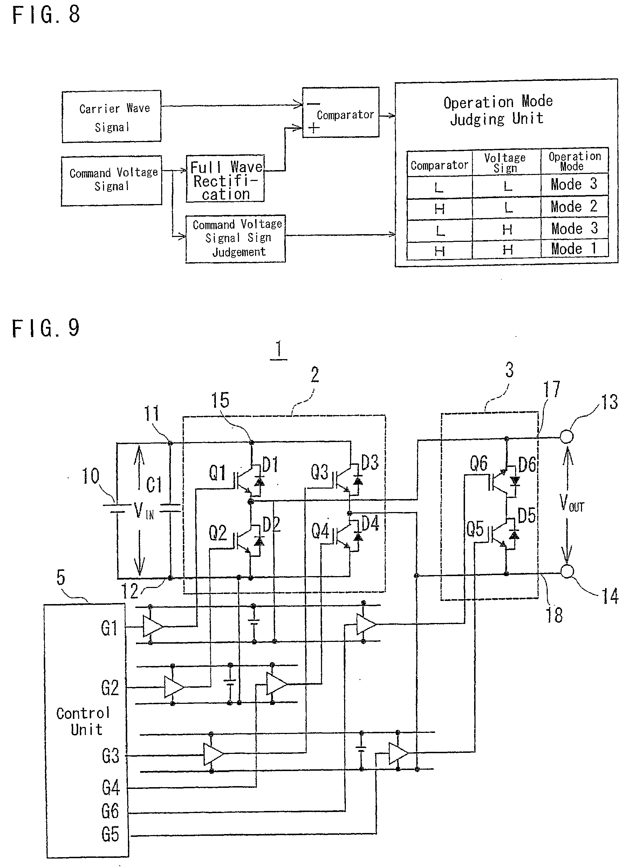

   FIG. 8 is a diagram showing judgment of operation mode in an inside processing of a control unit in the above mentioned modified example.
[FIG. 9]
   FIG. 9 is a circuit diagram showing another configuration of an inverter device in the above mentioned embodiment.
[FIG. 10]

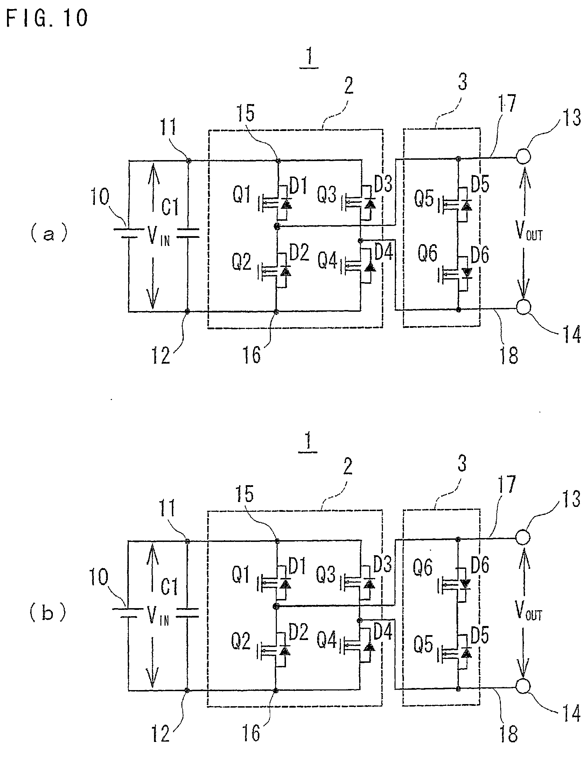

   FIGs. 10(a) and (b) are diagrams showing configuration examples using MOS-FETs as switching elements.
[FIG. 11]

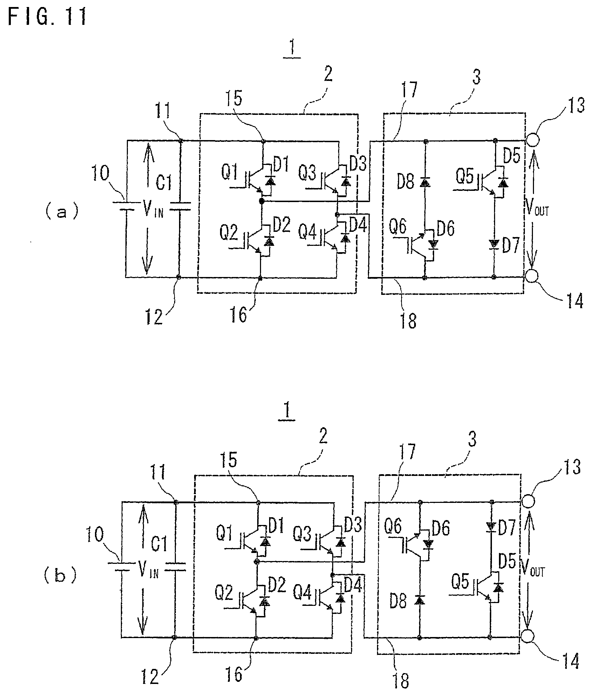

   FIGs. 11 (a) and (b) are diagrams showing examples using IGBTs as switching elements and configured so-called two arms configuration as a clamping circuit.
[FIG. 12]

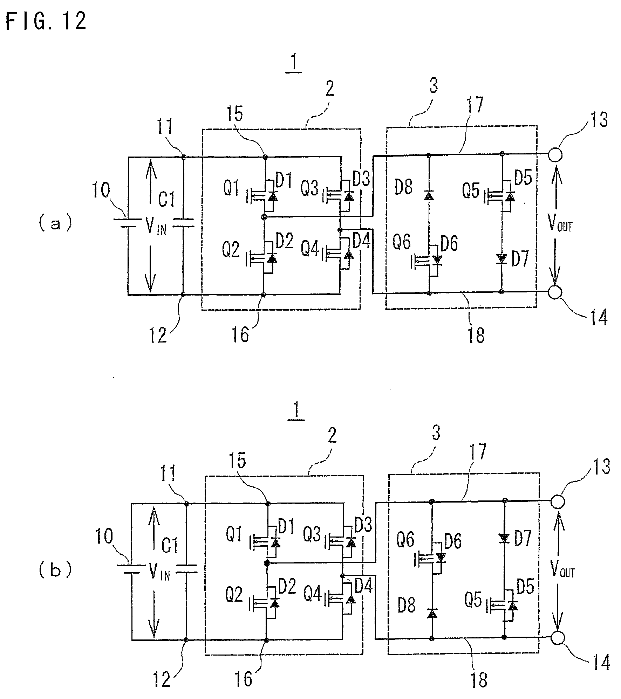

   FIGs. 12 (a) and (b) are diagrams showing examples using MOS-FETs as switching elements and configured so-called two arms configuration as a clamping circuit.
[FIG. 13]

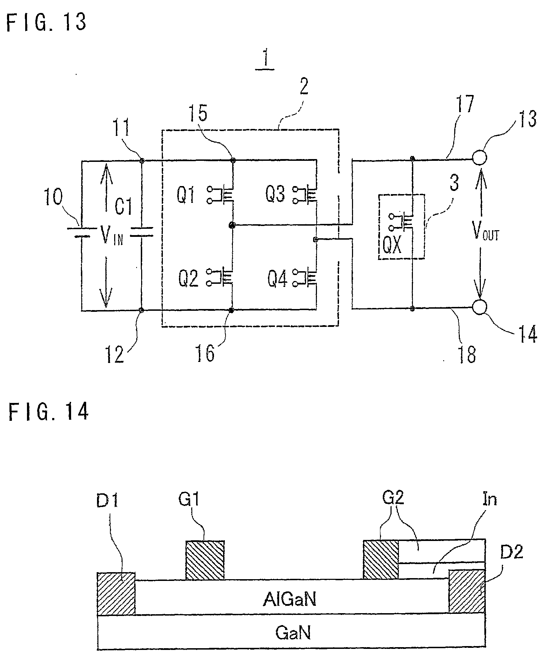

   FIG. 13 is a diagram showing an example using a GaN/AlGaN bidirectional switching element as switching elements.
[FIG. 14]
   FIG. 14 is a figure showing a sectional configuration of the GaN/AlGaN bidirectional switching element.
[FIG. 15]
   FIG. 15 is a circuit diagram showing a configuration of a conventional inverter device.
[FIG. 16]
   FIG. 16 is a timing chart in the conventional inverter device when the phase of an alternating voltage and the phase of an output electric current are coincided with each other.
[FIG. 17]
   FIG. 17 is a timing chart in the conventional inverter device when the phase of the alternating voltage and the phase of the output electric current are inconsistent with each other.
[FIG. 18]
   FIG. 18 is a voltage-current waveform chart showing a state in the conventional inverter device where output electric current is uncontrollable when the phase of the alternating voltage and the phase of the output electric current are inconsistent with each other.

### Best Mode for Carrying Out the Invention

An inverter device in accordance with an embodiment of the present invention is described with reference to the drawings. As shown in FIG. 1, in the inverter device 1 in accordance with this embodiment, a series circuit of switching elements Q1 and Q2 and a series circuit of switching elements Q3 and Q4 are connected to both terminals 11 and 12 of a direct current power supply 10 in parallel with each other so that an inverter circuit 2 of a full bridge is configured. In addition, output lines 17 and 18 are drawn out from a connection point 15 of the switching elements Q1 and Q2 and a connection point 16 of the switching elements Q3 and Q4, respectively. The output lines 17 and 18 are connected to a load or electric power system 4 through inductors L1 and L2. In addition, switching elements 5 and 6 are connected between the output lines 17 and 18 in series so that parasitism diodes or commutation diodes D5 and D6 of them are connected to face in opposite direction each other, and thus, a clamping circuit 3 is configured. In particular, in the configuration example shown in FIG. 1, an emitter of the switching element Q5 is connected to an emitter of the switching element Q6. Besides, diodes D1 to D4 show parasitism diodes or commutation diodes of the switching elements Q1 to Q4, respectively. In addition, IGBTs are illustrated in FIG. 1 as examples of semiconductor switching elements.

A control unit 5 carries out PWM (Pulse Width Modulation) controls to the switching elements Q1 and Q4 and to the switching elements Q2 and Q3 in turn respectively, in each half circle of a frequency (for example, 50Hz or 60Hz) of an alternating current power supply, for example. In addition, timings for switching the switching elements Q1 and Q4 on and off and timings for switching the switching elements Q2 and Q3 on and off are synchronized with each other. In the example shown in FIG. 1, since IGBTs are used as the switching elements Q1 to Q6, the control unit 5 switches the switching elements Q1 to Q6 on/off by controlling gate voltages of these IGBTs.

In this embodiment, in order to simplify the description, it is assumed that the control unit 5 controls on/off of the switching element Q5 and Q6 of the clamping circuit 3 in exact timing with on/off of one set of the switching elements Q1 and Q4 and another set of the switching elements Q2 and Q3 of the inverter circuit 2 in each half cycle of a command voltage signal which will be described later with no relation to voltage (polarity or sign) of the alternating voltage V_{AC}. Table 1 shows relations between on/off of the switching elements Q1 to Q6 and the operating states at those times in this embodiment. But it is assumed that dead-off time to mention later is not set. In addition, FIGs. 2 (a) to (c) show equivalent circuits and current flows in modes 1 to 3 in the following table 1, respectively. Besides, the present invention is not limited to the description of this embodiment, because there may be a case that the value of the above mentioned command voltage signal is suddenly varied to follow a phase jump when the phase of the alternating voltage is jumped.

**[Table 1]**

| Inverter Circuit Switching State | | Clamping Circuit Switching State | | Function | |
|---|---|---|---|---|---|
| Q1, Q4 | Q2, Q3 | Q5 | Q6 | Output Voltage | Operation Mode |
| ON | OFF | OFF | ON | V_{OUT} = V_{IN} <Positive Bias> | Mode 1 |
| OFF | ON | ON | OFF | V_{OUT} = -V_{IN} <Negative Bias> | Mode 2 |
| OFF | OFF | ON | ON | VOUT = 0 <0 bias> | Mode 3 |

In this embodiment, the control unit 5 carries out the PWM controls to on/off of the switching elements Q1 and Q4 of the inverter circuit 2 in a positive half cycle of the command voltage signal, so that the above mentioned mode 1 and mode 3 are alternately and repeatedly carried out. In the mode 1, the control unit 5 switches on the switching elements Q1 and Q4 of the inverter circuit 2, and switches off the switching elements Q2 and Q3. As shown in FIG. 2(a), an electric current from a direct current power supply 10 flows to the switching element Q1, an inductor L1, a load or electric power system 4, and the direct current power supply 10 in this order. (In case of following the above mentioned phase jump or charging operation of electricity which will be mentioned later, the electric current may be flow in opposite direction but the same path.) At this time, the switching element Q5 of the clamping circuit 3 is switched off, and the switching element Q6 is switched on. Since the parasitism diode or commutation diode D5 of the switching element Q5 is reversely biased against the alternating voltage, the electric current does not flow to the clamping circuit 3 but flows to the load or electric power system 4.

In the mode 3, the control unit 5 switches off all the switching elements Q1 to Q4 of the inverter circuit 2, and switches on the switching elements Q5 and Q6 to short-circuit the clamping circuit 3. In the mode 1, an electric current flows to the inductors L1 and L2 by switching on the switching elements Q1 and Q4, so that magnetic fluxes occur in the inductors L1 and L2. When the switching elements Q1 and Q4 are switched off, the magnetic fluxes occurred in the inductors L1 and L2 vary, so that induced electromotive forces occur in the inductors L1 and L2, and thereby, an electric current flows. As shown in FIG. 2(c), the electric current due to induced electromotive forces occurred in the inductors L1 and L2 flows through the clamping circuit 3 to the inductors L1 and L2 and the load or electric power system 4. Therefore, this electric current may not flow back to a buffer capacitor C1 through the parasitism diode or commutation diode D1 to D4 of the switching elements Q1 to Q4 of the inverter circuit 2.

In case of transition from a positive half cycle to a negative half cycle of the command voltage signal across a zero-cross point of the command voltage signal (≒ output voltage V_{OUT}), the control unit 5 carries out the above mentioned mode 1, mode 3 and mode 2 in this order. A procedure to shift from mode 1 to mode 3 is similar to the above. When shifting from mode 3 to mode 2, the switching element Q6 of the clamping circuit 3 is switched off, and the switching elements Q2 and Q3 are switched on. At this time, since the clamping circuit 3 is short-circuited in mode 3, even when the phase of the output electric current I_{OUT} is lagged behind the phase of the alternating voltage V_{AC}, the electric current continuously flows to the load or electric power system 4 through the clamping circuit 3 regardless of a discrepancy of the phase of the output electric current I_{OUT} against the phase of the alternating voltage V_{AC}. The same goes for the case that the phase of the output electric current I_{OUT} advances to the phase of the alternating voltage V_{AC}. When transition to the positive half cycle of the command voltage signal has been completed, the control unit 5 carries out the PWM controls to on/off of the switching elements Q2 and Q3 of the inverter circuit 2, and the above mentioned mode 2 and mode 3 are alternately and repeatedly carried out. The same goes for the case of transition from the negative half cycle to the positive half cycle of the command voltage signal across the zero-cross point of the command voltage signal. Consequently, when all the switching elements Q1 to Q4 are switched off, the inverter circuit 2 is completely cut off from the load or electric power system 4 by the clamping circuit 3.

A discrepancy of the phase of the output electric current I_{OUT} against the phase of the alternating voltage V_{AC} usually occurs in the vicinity of the zero-cross point of the alternating voltage. Therefore, the above mentioned mode 3 is carried out to include the zero-cross point of the alternating voltage, in other words, the clamping circuit 3 should be short-circuited, when all the two sets of switching elements Q1 and Q4, and, Q2 and Q3 which configure the inverter circuit 2 are switched off. By the way, in this embodiment, the PWM controls are carried out to on/off of the switching elements Q1 and Q4, and, Q2 and Q3 of the inverter circuit 2, and the PWM control is carried out to short-circuit the clamping circuit 3 while the former PWM controls are carried out, simultaneously.

FIG. 3 shows a timing chart of the PWM controls in this embodiment. In addition, FIG. 4 shows judgment of operation mode in an inside processing of the control unit 5. In FIG. 3, the uppermost shows waveforms of a first carrier wave signal, a second carrier wave signal and the command voltage signal, which the control unit 5 uses for the PWM controls. The first carrier wave signal has a waveform that the same profile (for example, a chopping wave) is repeatedly continued in a positive region of voltage. The second carrier wave signal has a waveform that the same profile (for example, a chopping wave) is repeatedly continued in a negative region of voltage. The command voltage signal has a waveform that voltage is alternately varied like a sinusoidal waveform in the positive region and the negative region and has the same frequency as that of the alternating current power supply. Besides, waveforms of the first carrier wave signal, the second carrier wave signal and the command voltage signal are not limited to the examples shown in FIG. 3, and it is sufficient that at least one of them has a waveform in which value of voltage is non-linearly varied with respect to passage of time, such as a waveform varying in parabolic.

In FIG. 3, second to fifth stages from the top show on/off states of one set of the switching elements Q1 and Q4 of the inverter circuit 2, the switching element Q5 of the clamping circuit 3, another set of the switching element Q2 and Q3 of the inverter circuit 2, and the switching element Q6 of the clamping circuit 3. Pay attention to the positive half cycle of the command voltage signal (that is, the output voltage V_{OUT}), the control unit 5 switches on the switching element Q1 and Q4 in a time period where a value of the command voltage signal is higher than a value of the first carrier wave signal, and switches off the switching element Q1 and Q4 and switches on the switching element Q5 in a time period where the value of the command voltage signal is lower than the value of the first carrier wave signal. On the other hand, during the positive half cycle of the alternating voltage, the control unit 5 constantly switched off the switching elements Q2 and Q3 and constantly switches on the switching element Q6. In a time period where the switching elements Q5 and Q6 are switched on simultaneously, the clamping circuit 3 is short-circuited.

Similarly, in a region of negative half cycle of the command voltage signal (output voltage V_{OUT}), the control unit 5 switches on another set of switching element Q2 and Q3 which configure the inverter circuit 2 in a time period where the value of the command voltage signal is lower than the value of the second carrier wave signal, and switches off the another switching elements Q2 and Q3 and switches on the switching element Q6 in a time period where the value of the command voltage signal is higher than the value of the second carrier wave signal. In addition, during the negative half cycle of the alternating voltage, the control unit 5 constantly switches off the switching elements Q1 and Q4 and constantly switches on the switching element Q5.

As shown in FIG. 4, the control unit 5 has two comparators, for example, and the first carrier wave signal and the command voltage signal are input into a first comparator so that voltages of them are compared, and the second carrier wave signal and the command voltage signal are input into a second comparator so that voltages of them are compared. An operation mode judgment unit in the control unit 5 judges whether current operation mode corresponds to anyone of the mode 1, mode 2 and mode 3 following to a table illustrated in the figure, and the control unit 5 controls switching on/off of the switching elements Q1 to Q6 according to the result of judgment. Switching on/off control of the switching elements Q1 to Q6 by the control unit 5 may be digital control, or may be analog control. In the latter case, OP (operational) amplifiers are used as base or gate driving circuits of the switching elements Q1 to Q6, for example, and the first carrier wave signal and the command voltage signal or the second carrier wave signal and the command voltage signal are input into each OP amplifier. Thereby, the switching elements Q1 to Q6 are switched on/off following to the time charts shown in FIG. 3.

As can be seen from FIG. 3, in the PWM controls in a positive or negative half cycle of the command voltage signal, a time period where the switching elements Q1 and Q4 or Q2 and Q3 are switched on is shorter and a time period where the switching elements Q5 and Q6 are switched on is longer in the vicinity of zero-cross point of the command voltage signal. On the other hand, a time period where the switching elements Q1 and Q4 or Q2 and Q3 are switched on is longer and a time period where the switching elements Q5 and Q6 are switched on is shorter in the vicinity of a midway point of a positive negative half cycle of the alternating voltage. Therefore, an average voltage of the output voltage V_{OUT} between the output terminals 13 and 14 of this inverter device 1 is approached to a sinusoidal wave.

Paying attention to a time period T0 which includes zero-cross point of the command voltage signal, all of the two sets of the switching elements Q1 and Q4, and, Q2 and Q3 which configure the inverter circuit 2 are switched off, and the switching elements Q5 and Q6 which configure the clamping circuit 3 are switched on. In other words, it is in a state of mode 3 shown in FIG. 2(c), so that the clamping circuit 3 is short-circuited, and the output current commutates into the clamping circuit 3 regardless of the polarity thereof, and does not flow into the inverter circuit 2 and the buffer capacitor C1.

If the PWM controls are carried out to on-time of the switching elements Q5 or Q6 so that a discrepancy of the phase of the output electric current I_{OUT} against the phase of the alternating voltage V_{AC} is settled into the time period T0, an electric current due to electricity stored in the inductors or the like can be controlled even in a time period where the phase of the output voltage and the phase of the output electric current are inconsistent with each other.

In this embodiment, the control unit 5 carries out the PWM controls to either one set among the two sets of the switching element Q1 and Q4, and, Q2 and Q3, and makes the clamping circuit 3 short-circuit by switching on the witching elements Q5 and Q6 simultaneously for switching off all of the two sets of switching elements Q1 to Q4 during the PWM controls, in each of the positive or the negative half cycle of the command control signal. Therefore, an electric current caused by the inductors L1 and L2 or the like never flows back to the inverter circuit 2 and the buffer capacitor C1 during the PWM controls.

Subsequently, dead time is described. In the timing chart shown in FIG. 3, timings when the switching elements Q1 and Q4 are switched on and timings when the switching element Q5 is switched off are illustrated substantially the same, for example. The same goes for timings when the switching elements Q1 and Q4 are switched off and timings when the switching element Q5 is switched on. However, it is impossible to switch on or off a plurality of the switching elements simultaneously, as is generally known. If a timing when the switching element Q5 is switched on was earlier than a timing when the switching elements Q1 and Q4 are switched off, the direct current power supply 10 is short-circuited by the clamping circuit 3, and thus, a large electric current flows so that there is a fear of burnout of the inverter circuit 2 or the clamping circuit 3. Therefore, the control unit 5 establishes dead times in an interval from switching off one set of the switching elements Q1 and Q4 or Q2 and Q3 to short-circuiting the clamping circuit 3, and an interval from non-short-circuiting of the clamping circuit 3 to switching on one set of the switching elements Q1 and Q4 or Q2 and Q3. Definition of the dead time is shown in FIG. 5. The dead time in this embodiment is defined as a state that the switching elements Q1 and Q4 and Q5 are switched off while the switching elements Q2 and Q3 are constantly switched off and the switching element Q6 is constantly switched on, and, a state that the switching elements Q2 and Q3 and Q6 are switched off while the switching elements Q1 and Q4 are constantly switched off and the switching element Q5 is constantly switched on.

Generally, it is considered to establish dead times, where all the switching elements Q1 to Q6 are temporarily switched off, in order to prevent short-circuiting of the direct current power supply, and so on. However, as mentioned above, the switching elements Q5 and Q6 which configure the clamping circuit 3 are connected in a manner so that the parasitism diodes or commutation diodes D5 and D6 face in opposite direction each other. Therefore, if the switching elements Q5 and Q6 are switched off simultaneously in this embodiment, the clamping circuit 3 becomes cut-off state, so that an electric current I_{OUT} flows back to the buffer capacitor C1 through the parasitism diodes or commutation diodes D1 to D4 of the switching elements Q1 to Q4, as shown in FIG. 6(a). Then, the control unit 5 controls the clamping circuit 3 to be a rectification state that is reverse bias against the command voltage signal at that time during the dead time while the PWM controls are carried out, as shown in FIG. 6(b). Specifically, in the positive half cycle of the command voltage signal, the switching element Q6 is constantly switched on, and in the negative half cycle of the command voltage signal, the switching element Q5 is constantly switched on, in FIG. 3. The clamping circuit 3 can take either one of a short-circuit state shown in FIG. 2(c), a rectification state to be reverse bias when the command voltage signal is positive shown in FIG. 2(a), a rectification state to be reverse bias when the command voltage signal is negative shown in FIG. 2(b), and a cut-off state shown in FIG. 6(a). The cut-off state shown in FIG. 6, however, can be taken only when this inverter device 1 is inactive.

Subsequently, Table 2 shows relations between on/off of the switching elements Q1 to Q6 and the operating states at those times in consideration of the above mentioned dead times.

**[Table 2]**

| Inverter Circuit Switching State | | Clamping Circuit Switching State | | Function | |
|---|---|---|---|---|---|
| Q1, Q4 | Q2, Q3 | Q5 | Q6 | Output Voltage | Operation Mode |
| ON | OFF | OFF | ON | V_{OUT} = V_{IN} <Positive Bias> | Mode 1 |
| OFF | ON | ON | OFF | V_{OUT} = -V_{IN} <Negative Bias> | Mode 2 |
| OFF | OFF | ON | ON | VOUT = 0 <O bias> | Mode 3 |
| OFF | OFF | OFF | ON | V_{OUT} = V_{IN} Or V_{OUT} = -V_{IN} | Dead Time 1 |
| OFF | OFF | ON | OFF | V_{OUT} = V_{IN} Or V_{OUT} = -V_{IN} | Dead Time 2 |
| OFF | OFF | OFF | OFF | V_{OUT} = V_{IN} Or V_{OUT} = -V_{IN} | Inactive mode |

In the positive half cycle of the command voltage signal, in case for carrying out the PWM controls to switch on/off the switching element Q1 and Q4 of the inverter circuit 2, the control unit 5 repeatedly carries out the mode 1, dead time 1, mode 3, dead time 1, mode 1 in this order. The switching element Q6 has been constantly switched on in the meantime. In addition, in the negative half cycle of the command voltage signal, in case for carrying out the PWM controls to switch on/off the switching element Q2 and Q3 of the inverter circuit 2, the control unit 5 repeatedly carries out the mode 2, dead time 2, mode 3, dead time 2, mode 2 in this order. The switching element Q5 has been constantly switched on in the meantime. In case of transition from the positive half cycle to the negative half cycle of the alternating voltage, the control unit 5 carries out the mode 1, dead time 1, mode 3, dead time 2, mode 2 in this order. All the switching elements Q1 to Q6 are never switched on simultaneously in the meantime.

Subsequently, a modified example of the PWM controls in this embodiment is shown in FIG. 7 and FIG. 8. FIG. 7 shows a timing chart of the PWM controls in this modified example. In addition, FIG. 8 shows an operation mode judgment in an inside processing of the control unit 5 in this modified example. In the example shown in FIG. 3, the PWM controls of the switching elements Q1 to Q4 are carried out with using two carrier wave signals and one command voltage signal, on the other hand, in the modified example shown in FIG. 7, the PWM controls are carried out with using one carrier wave signal and one command voltage signal. In FIG. 7, the uppermost shows waveforms of a carrier wave signal and the command voltage signal, which the control unit 5 uses for the PWM controls. Similar to the first carrier wave signal in FIG. 3, the carrier wave signal has a waveform that the same profile (for example, a chopping wave) is repeatedly continued in a positive region of voltage. The command voltage signal has a waveform that voltage is alternately varied like a sinusoidal waveform in the positive region and the negative region and has the same frequency as that of the alternating current power supply, and the control unit 5 uses the command voltage signal to which full-wave rectification is carried out. Second stage from the top in FIG. 2 (SIC: FIG.7) shows signs of the command voltage signal, that is, timings of the positive half cycle and the negative half cycle of the command voltage signal. Third to sixth stages from the top in FIG. 7 are the same as the second to fifth stages in FIG. 3.

Paying attention to the positive sign of the command voltage signal, that is, the positive half cycle of the command voltage signal, the control unit 5 switches on the switching elements Q1 and Q4 in a time period where a value of the command voltage signal is higher than a value of the carrier wave signal, and switches off the switching elements Q1 and Q4 and switches on the switching element Q5 in a time period where the value of the command voltage signal is lower than the value of the carrier wave signal. On the other hand, during the positive half cycle of the command voltage signal, the control unit 5 constantly switches off the switching elements Q2 and Q3 and on constantly switches on the switching element Q6. During the switching elements Q5 and Q6 are switched on simultaneously, the clamping circuit 3 is short-circuited.

Similarly, in a region that the sign of the command voltage signal is negative, that is, in a negative half cycle of the command voltage signal, the control unit 5 switches on another set of the switching elements Q2 and Q3 which configure the inverter circuit 2 in a time period where the value of the command voltage signal is higher than the value of the carrier wave signal, and switches off the another set of the switching elements Q2 and Q3 and switches on the switching element Q6 in a time period where the value of the command voltage signal is lower than the value of the carrier wave signal. In addition, during the negative half cycle of the command voltage signal, the control unit 5 constantly switches off the switching elements Q1 and Q4 and constantly switches on the switching element Q5.

As shown in FIG. 8, the control unit 5 has a single comparator, for example, and the command voltage signal and the carrier wave signal to which full-wave rectification is carried out are input into the comparator so that voltages of them are compared. An operation mode judgment unit in the control department 5 judges whether current operation mode corresponds to any one of the mode 1, mode 2 and mode 3 following to a table illustrated in the figure, and the control unit 5 controls switching on/off of the switching elements Q1 to Q6 according to the result of judgment. Thereby, the switching elements Q1 to Q6 are switched on/off following to the timing chart shown in FIG. 7. According to this modified example, a number of the comparator and the carrier wave signal can be down by half, and can be simplified the configuration of the control unit 5 and calculation processing in the control unit 5. In addition, in comparison with the case of using two carrier wave signals, it is possible to avoid influence due to an error between the carrier wave signals.

Subsequently, another configuration of the inverter device 1 in accordance with the present invention is shown in FIG. 9. In comparison with the configuration shown in FIG. 1, the switching elements Q5 and Q6 which configure the clamping circuit 3 is replaced, and a collector of the switching element Q5 and a collector of the switching element Q6 are connected each other. In addition, in order to maintain the rectification state to be reverse bias against the output voltage V_{OUT}, positions of the switching elements Q5 and Q6 are counterchanged. According to the configuration shown in FIG. 9, an emitter of the switching element Q1 and an emitter of the switching element Q6 become the same electric potential, and an emitter of the switching element Q3 and an emitter of the switching element Q5 become the same electric potential. In addition, an emitter of the switching element Q2 and an emitter of the switching element Q4 become the same electric potential. In this way, it is possible to use the same electric power supply voltage commonly for driving circuits of the switching elements (IGBTs) having the same emitter electric potential, as shown in FIG. 9. Therefore, electric power supplies for the switching elements Q5 and Q6 can be omitted, although it is not illustrated specifically in FIG. 1.

FIG. 10 shows a configuration example using MOS-FETs as for the switching elements Q1 to Q6. In FIG. 10, (a) shows an example in which parasitism diodes are arranged in the same directions as those in the configuration example shown in FIG. 1, and (b) shows an example in which parasitism diodes are arranged in the same directions as those in the configuration example shown in FIG. 9.

FIG. 11 shows an example that the clamping circuit 3 is so-called two-arms configuration that two series circuits of a switching element and a rectification diode are inversely connected in parallel so that a parasitism diode or commutation diode of the semiconductor switching element and the rectification diode are connected to face in opposite direction each other. IGBTs are use as the switching elements, and the IGBTs for the switching elements Q5 and Q6 are connected so that the commutation diodes of the IGBTs and the rectification diodes D7 and D8 face in opposite direction. In FIG. 11, (a) shows an example that parasitism diodes are arranged in the same directions as those of the configuration example shown in FIG. 1, and (b) shows an example that parasitism diodes are arranged in the same directions as those of the configuration example shown in FIG. 9. In addition, FIG. 12 shows that MOS-FETs are used as the switching elements, and the clamping circuit 3 is so-called two arms configuration which is an inverse-parallel connection of two series circuits of a switching element and a rectification diode. In these cases that the clamping circuit 3 is two arms configuration, choices of the diodes and the switching circuit configurations are widen, and it is less subjected by recovery loss of the diodes, and enables to fasten speed of response. Besides, although the hardware configuration of the inverter device 1 having the clamping circuit 3 of two arms configuration becomes that of the conventional inverter device 100 shown in FIG. 15, a software configuration to control on/off of the switching elements is different, as mentioned above.

FIG. 13 shows an example using GaN/AlGaN bidirectional switching elements for the switching elements Q1 to Q4 which configure the inverter circuit 2 and a single switching element QX which configures the clamping circuit 3. FIG. 14 shows a cross-sectional view of the GaN/AlGaN bidirectional switching element. In this GaN/AlGaN bidirectional switching element, drain electrodes D 1 and D2 are formed to reach GaN layer each, and gate electrodes G1 and G2 are formed on AlGaN layer each. In a state that no voltage is applied to the gate electrodes G1 and G2, a blank zone of electron occurs in a two-dimensional electron gas layer which is generated in Hetero interface of AlGaN/GaN just below the gate electrodes G1 and G2, so that no electric current flows. On the other hand, when voltages are applied to the gate electrodes G1 and G2, an electric current flows in the Hetero interface of AlGaN/GaN from the drain electrode D1 to the electrode D2 (and vice versa). In other words, the GaN/AlGaN bidirectional switching element can flow the electric current in bidirectional, so that the clamping circuit 3 can be configured by a single switching element. In addition, when a voltage is applied to only one of the two gate electrodes of the GaN/AlGaN bidirectional switching element, it shows a diode characteristic to be reverse bias against polarity of alternating voltage. Furthermore, since the GaN/AlGaN bidirectional switching element has no parasitism diode, when using the GaN/AlGaN bidirectional switching elements for the switching elements Q1 to Q4 which configure the inverter circuit 2, electric current never flows back to the buffer capacitor C1 under dead off state where all the switching elements Q1 to Q4 and QX are switched off simultaneously.

In addition, the present invention is not limited to the above mentioned description of the embodiments, it can be deformed or applied in various manners. In the above mentioned embodiment, although the control unit 5 carries out the PWM controls to the switching elements Q1 and Q4, and, Q2 and Q3, respectively in a positive half cycle or a negative half cycle of the output voltage V_{OUT}, the present invention is not limited to the cases that carry out the PWM controls. The present invention can be applied to a case that the switching elements Q1 and Q4, and, Q2 and Q3 are simply switched on/off in the positive half cycle or the negative half cycle of the output voltage V_{OUT}, for example.

In addition, it is possible to vary pulse width in the PWM control optionally by varying one or both of voltage and frequency of the command voltage signal. Therefore, it is possible to vary the frequency and/or the voltage of the output voltage V_{OUT} by varying at least one of the voltage and the frequency of the command voltage signal responding to a control signal from another device, for example. Therefore, it is possible to drive an inductive load such as an electric motor or a capacitance load such as a fluorescent lamp.

In addition, it is possible to use a secondary battery as the direct current power supply and the inverter circuit 2 is driven as a synchronization rectifying circuit. Such a secondary battery may be connected with the input terminals 11 and 12 of the inverter circuit 2 directly, or connected to the input terminals 11 and 12 of the inverter circuit 2 through a DC/DC converter. For charging electricity into the secondary battery, an alternating current electric power system is connected between the two output terminals 13 and 14 of the inverter circuit 2, and electricity from the electric power system is charged into the secondary battery. For discharging electricity from the secondary battery, switching driving is carried out to the switching elements Q1 to Q6 as mentioned above, so that alternating voltage is output from the two output terminals 13 and 14. Therefore, the secondary battery and this inverter device 1 can be used as an emergency power supply.

Furthermore, it is possible to provide a voltage detection unit for detecting a voltage of an alternating voltage V_{AC}, and the control unit 5 is used as an individual operation detecting device. Periodic variation of reactive power can be generated in an output from the inverter circuit 2 by varying the command voltage signal, as mentioned above. When this inverter device 1 is individually operated and cut off from the electric power system, the above mentioned periodic variation appears in voltage detected by the voltage detection unit, so that it is possible to detect whether this inverter device is individually operated and cut off from the electric power system or not.

This application is based on Japan patent application 2013-069266, and, contents of which should be united in this invention consequently by referring to the description and drawings of the above mentioned patent application.

In addition, although the present invention is sufficiently described in the form of embodiments referring to the attached drawings, it is obvious to a person having ordinal skill in the art that the present invention can be modified or deformed in various manners. Therefore, such deformation and modification should be interpreted not to protrude from the scope of the present invention and to be included in the scope of the present invention.

### Explanation of symbols

- 1: Inverter device
- 2: Inverter circuit
- 3: Clamping circuit
- 4: Load or electric power system
- 5: Control unit
- 10: Direct current power supplies
- 13, 14: Output terminals
- L1, L2: Inductors
- C1: Buffer capacitor
- Q1 to Q6,: QXSwitching elements
- D1 to D6: Parasitism diodes or commutation diodes

## Claims

1. An inverter device comprising:
an inverter circuit which is connected to a direct current power supply, and converts direct current power to alternating current power by switching two pairs of switching elements alternately corresponding to predetermined control signals;
a clamping circuit which is configured of at least one switching element connected between two output terminals of the inverter circuit; and
a control unit which controls switching on and off of the switching elements of the inverter circuit and the clamping circuit, and wherein
the control unit short-circuits the clamping circuit when all of the two sets of the switching elements are switched off, thereby enables to control an electric current in a time period where polarity of an alternating voltage and polarity of output electric current are inconsistent with each other.

2. The inverter device in accordance with claim 1, **characterized by** that
the control unit carries out PWM controls to either one of the two sets of the switching elements in a predetermined time period of the predetermined control signals, and short-circuits the clamping circuit when it switches off all of the two sets of the switching elements while carrying out the PWM control.

3. The inverter device in accordance with claim 1 or claim 2, **characterized by** that
dead times are provided in an interval from switching off one set of the switching elements or another set of the switching elements among the two sets of the switching elements to short-circuiting the clamping circuit, and in an interval from non short-circuiting the clamping circuit to switching on the one set of the switching elements or the another set of the switching elements.

4. The inverter device in accordance with claim 3 **characterized by** that
the clamping circuit can take one of a short-circuit state, a rectification state to be reverse bias when an output voltage from the inverter circuit is positive, a rectification state to be reverse bias when the output voltage is negative, and a cut-off state, and
the control unit controls the clamping circuit to take the rectification state to be reverse bias against the output voltage at that time during the dead times.

5. The inverter device in accordance with one of claim 2, claim 3 or claim 4 depended on claim 2, **characterized by** that
the control unit uses a first carrier wave signal that a same profile is repeatedly continued in a positive region of voltage, a second carrier wave signal that a same profile is repeatedly continued in a negative region of voltage, and a command voltage signal that voltage is alternately varied like a sinusoidal waveform in the positive region and the negative region of voltage and has a same frequency as that of an alternating current power supply,
in the positive region of voltage,
the control unit switches on one set of the switching elements that configure the inverter circuit in a time period where a value of the command voltage signal is higher than a value of the first carrier wave signal,
the control unit switches off the one set of the switching elements and short-circuits the clamping circuit in a time period where the value of the command voltage signal is lower than the value of the first carrier wave signal,
in the negative region of voltage,
the control unit switches on another set of the switching elements that configure the inverter circuit in a time period where the value of the command voltage signal is lower than a value of the second carrier wave signal, and
the control unit switches off the another set of the switching elements and short-circuits the clamping circuit in a time period where the value of the command voltage signal is higher than the value of the second carrier wave signal.

6. The inverter device in accordance with one of claim 2, claim 3 or claim 4 depended on claim 2, **characterized by** that
the control unit uses a carrier wave signal that a same profile is repeatedly continued in a positive region of voltage, and a command voltage signal that voltage is alternately varied like a sinusoidal waveform in the positive region and has a same frequency as that of an alternating current power supply,
in a region where a sign of the command voltage signal is positive,
the control unit switches on one set of the switching elements that configure the inverter circuit in a time period where a value of the command voltage signal is higher than a value of the carrier wave signal,
the control unit switches off the one set of the switching elements and short-circuits the clamping circuit in a time period where the value of the command voltage signal is lower than the value of the carrier wave signal,
in a region where a sign of the command voltage signal is negative,
the control unit switches on another set of the switching elements that configure the inverter circuit in a time period where the value of the command voltage signal is higher than the value of the carrier wave signal, and
the control unit switches off the another set of the switching elements and short-circuits the clamping circuit in a time period where the value of the command voltage signal is lower than the value of the carrier wave signal.

7. The inverter device in accordance with one of claims 1 to 6, **characterized by** that
the clamping circuit is a series connection of two semiconductor switching elements so that parasitism diodes or commutation diodes of them face in opposite direction each other.

8. The inverter device in accordance with one of claims 1 to 6, **characterized by** that
the clamping circuit is an inverse-parallel connection of two series circuits of a semiconductor switching element and a rectification diode so that a parasitism diode or a commutation diode of the semiconductor switching element and the rectification diode face in opposite direction each other.

9. The inverter device in accordance with one of claims 1 to 6, **characterized by** that
the clamping circuit is a series connection of two semiconductor switching elements so that parasitism diodes or commutation diodes of them face in opposite direction each other, and
one of the semiconductor switching elements of the clamping circuit, in which a parasitism diode or a commutation diode thereof becomes forward bias with respect to an output voltage from the inverter circuit, is switched on, in a time period where one set of the switching elements or another set of the switching elements among the two sets of the switching elements are has been switched on.

10. The inverter device in accordance with one of claims 1 to 6, **characterized by** that
the inverter circuit is configured of parallel connection of two series circuits of two IGBTs in which a collector of one is connected to an emitter of another, and
the clamping circuit is configured of a series circuit of two IGBTs in which correctors of them are connected each other, and wherein
driving circuits of the IGBTs in which electric potential of emitters are at same level are connected to a same electric power supply.

11. The inverter device in accordance with one of claims 1 to 6, **characterized by** that
the clamping circuit is a bidirectional switching element of a dual-gate type GaN/AlGaN having no parasitism diode.

12. The inverter device in accordance with one of claims 1 to 11, **characterized by** that
the control unit can vary at least one of voltage and frequency of the command voltage signal, and thereby, to drive an inductive load or a capacitive load.

13. The inverter device in accordance with one of claims 1 to 12, **characterized by** that
the direct current power supply is a secondary battery directly or indirectly connected to input terminals of the inverter circuit, and
the control unit gives a charge of electricity from an alternating current power supply connected to two output terminals of the inverter circuit into the secondary battery by driving the inverter circuit as a synchronous rectification circuit.

14. The inverter device in accordance with one of claims 1 to 13, **characterized by** that
the device further has a voltage detection unit to detect a voltage of the alternating voltage, and
the control unit generates periodic reactive power variation in an output from the inverter circuit by varying the command voltage signal, and detects whether the inverter device carries out individual operation cut off from an alternating current power system or not, based on voltage variation and frequency variation detected by the voltage detection unit.
